# EUROPÄISCHE PATENTSCHRIFT

(11) **EP 2 240 710 B1**
(45) Veröffentlichungstag und Bekanntmachung des Hinweises auf die Patenterteilung: **13.01.2016**
(21) Anmeldenummer: 08870426.7
(22) Anmeldetag: 23.10.2008
(51) Int. Cl.: F16H 61/28, F16H 61/30, F16H 63/30, F16H 63/38

(54) **GETRIEBESTELLER**
GEAR ACTUATOR
ACTIONNEUR DE BOÎTE DE VITESSES

(30) Priorität: 04.01.2008 DE 102008003193
(43) Veröffentlichungstag der Anmeldung: 20.10.2010
(73) Patentinhaber: WABCO GmbH, 30453 Hannover (DE)
(72) Erfinder: HEURICH, Mike, 31552 Apelern (DE); HÖLSCHER, Reiner, 30926 Seelze (DE); KELPE, Holger, 30453 Hannover (DE); MEYER, Ingo, 31547 Rehburg-Loccum (DE); SCHULZ, Marcus, 31535 Neustadt (DE); SIEVERS, Andreas, 31319 Sehnde (DE); SPREMBERG, Jan, 31157 Sarstedt (DE); WIGGERS, Tino, 30926 Seelze (DE)
(74) Vertreter: Lauerwald, Jörg
(86) Internationale Anmeldenummer: PCT/EP2008/008975
(87) Internationale Veröffentlichungsnummer: WO 2009/086856

(56) Entgegenhaltungen:
- WO-A-03/062677
- DE-A1- 10 350 938
- FR-A- 2 313 607
- JP-A- H0 389 076

## Beschreibung

Die Erfindung betrifft einen Getriebesteller zum Schalten eines Getriebes, mit einem Gassenschaltantrieb, einem Gangschaltantrieb und einem vom Gassenschaltantrieb und vom Gangschaltantrieb bewegbaren Schaltfinger zum Übertragen einer Schaltbewegung auf das Getriebe, gemäß dem Oberbegriff des Patentanspruchs 1.

Derartige Getriebesteller sind bekannt und weisen einen an einem Schaltantrieb schwenkbar gelagerten Schaltfinger auf, der eine lineare Bewegung des Schaltantriebs in eine Schwenkbewegung umsetzt. Ein Schwenken des Schaltfingers führt zu einem Wechseln eines Gangs oder einer Gasse des Getriebes.

Gattungsgemäße Getriebesteller sind aus der JP H03 89 076 A und der DE 103 50 938 A1 bekannt. Das Dokument JP H 0389076 A zeigt alle Merkmale des Oberbegriffs von Anspruch 1.

Nachteilig an bekannten Getriebestellern ist, dass sie individuell auf das jeweilige Getriebe zugeschnitten sein müssen. Bislang hat das keinen großen Nachteil bedeutet, da Getriebesteller beispielsweise in Lastkraftwagen serienmäßig eingebaut werden. Sollen aber bestehende Lastkraftwagen mit manuellen Getrieben mit Getriebestellern nachgerüstet werden, so muss für jedes Getriebe ein neuer Getriebesteller konstruiert werden, was aufwändig und teuer ist. Die Individualität der Getriebesteller führt zudem zu einer aufwändigen Lagerhaltung.

Der Erfindung liegt die Aufgabe zugrunde, Nachteile im Stand der Technik zu überwinden. Die Erfindung löst das Problem durch einen gattungsgemäßen Getriebesteller, der ein mit dem Gassenschaltantrieb verbundenes Gassenschalt-Verschiebestück und ein mit dem Gangschaltantrieb verbundenes Gangschalt-Verschiebestück umfasst, wobei der Schaltfinger an dem Gassenschalt-Verschiebestück und dem Gangschalt-Verschiebestück verschieblich geführt gelagert ist.

Vorteilhaft an dem erfindungsgemäßen Getriebesteller ist seine Modularisierbarkeit. Dadurch, dass der Schaltfinger verschieblich geführt gelagert ist, können beispielsweise unterschiedliche Schaltwege bei verschiedenen Getrieben leicht dadurch eingestellt werden, dass die Schaltbewegung beispielsweise durch Anschläge begrenzt wird. Ein Getriebesteller kann somit für viele verschiedene Arten von Getrieben verwendet werden. Es ist ein weiterer Vorteil, dass der erfindungsgemäße Getriebesteller robust ist und eine einfache Konstruktion aufweist. Er kann zudem leicht aus Standardkomponenten zusammengebaut werden. Aus dem oben Genannten folgt zudem ein geringerer Lager- und Logistikaufwand bei der Wartung von erfindungsgemäßen Getriebestellern.

Im Rahmen der vorliegenden Beschreibung wird unter einem Gassenschaltantrieb insbesondere ein automatischer Antrieb verstanden, der so angeordnet ist, dass mit seiner Hilfe eine Gasse des Getriebes gewechselt werden kann, wenn der Getriebesteller an dem Getriebe montiert ist. Analog wird unter einem Gangschaltantrieb insbesondere ein automatischer Antrieb verstanden, der zum Schalten zwischen zwei Gängen des Getriebes ausgebildet ist.

Unter einem Schaltfinger wird insbesondere jede Komponente verstanden, die die Schaltbewegung des Getriebestellers auf das Getriebe überträgt. Der Schaltfinger muss dazu nicht fingerartig ausgebildet sein. Es ist auch möglich, dass der Schaltfinger ein entsprechendes Gegenstück des Getriebes umfasst oder auf andere Weise mit ihm mechanisch gekoppelt ist.

Es ist möglich, nicht aber notwendig, dass der Schaltfinger zwischen dem Gangschalt-Verschiebestück und dem Gassenschalt-Verschiebestück angeordnet ist. In diesem Fall kann der Schaltfinger mittels einer Linearführung am Gangschalt-Verschiebestück einerseits und mit einer weiteren Linearführung an dem Gassenschalt-Verschiebestück verschieblich geführt gelagert sein. Eine besonders einfache Konstruktion ergibt sich, wenn die Führungen gerade Linearführungen sind, die sich entlang einer Geraden erstrecken.

Um mit dem Schaltfinger einfach die Gasse wechseln zu können, um also insbesondere den Schaltfinger einfach aus dem Eingriff in eine Getriebestange in Eingriff mit einer anderen Getriebestange bringen zu können, besitzt der Getriebesteller erfindungsgemäß eine Rastkontur, wobei ein Verschiebestück, insbesondere das Gang-Verschiebestück, einen vorgespannten Rastbolzen besitzt, der mit der Rastkontur zum Verrasten des Schaltfingers in einer vorgegebenen Position in der Gangschalt-Arbeitsrichtung zusammenwirkt. Der Rastbolzen ist beispielsweise mit einer Feder vorgespannt, die ihn aus dem Gang-Verschiebestück nach außen drückt. Mit einer aus dem Gang-Verschiebestück herausragenden Spitze greift der Rastbolzen in die Rastkontur ein, um das Gang-Verschiebestück an einer Position zu verrasten, in der besonders leicht die Gasse gewechselt werden kann.

In einer bevorzugten Ausführungsform besitzt der Gassenschaltantrieb eine Gassenschalt-Arbeitsrichtung und der Gangschaltantrieb besitzt eine Gangschalt-Arbeitsrichtung, die im Wesentlichen senkrecht zur Gassenschalt-Arbeitsrichtung verläuft. Die Gassenschalt-Arbeitsrichtung ist diejenige Bewegungsrichtung, in die der Gassenschaltantrieb eine Bewegung ausführt, um mittels des Schaltfingers die Gasse des Getriebes zu wechseln. Analog dazu ist die Gangschalt-Arbeitsrichtung diejenige Bewegungsrichtung, in die der Gangschaltantrieb mit dem Schaltfinger eine Arbeitsbewegung ausführt, damit der Schaltfinger einen Gang am Getriebe wechselt.

Besonders günstig sind der Gassen- und Gangschaltantrieb als Linearantriebe ausgebildet, die eine lineare Arbeitsbewegung ausführen. Vorteilhafterweise sind die Gassenschalt- und die Gangschalt-Arbeitsrichtung parallel zu einer Gassenschalt-Führungsrichtung bzw. einer Gangschalt-Führungsrichtung, unter denen der Schaltfinger am Gassenschalt-Verschiebestück bzw. am Gangschalt-Verschiebestück linear verschieblich geführt gelagert ist.

In einer bevorzugten Ausführungsform ist der Schaltfinger an dem Gassenschalt-Verschiebestück und dem Gangschalt-Verschiebestück mittels einer Reibverbindung geführt gelagert. Hierunter ist insbesondere zu verstehen, dass der Schaltfinger in dem Gassenschalt- und Gangschalt-Verschiebestück gleitet. Es ist jedoch auch möglich, dass der Schaltfinger an dem Gassenschalt-Verschiebestück bzw. dem Gangschalt-Verschiebestück über reibungsvermindernde Komponenten gelagert ist, beispielsweise über in einem Käfig gelagerte Kugeln.

Eine besonders kompakte, bevorzugte Konstruktion, bei der zudem nur kleine Kippmomente entstehen und die daher besonders verschleißarm ist, wird erhalten, wenn der Schaltfinger ein Verschiebestück, insbesondere das Gassenschalt-Verschiebestück, durchgreift. Besonders günstig ist es, wenn der Schaltfinger das Verschiebestück zentrisch durchgreift, das heißt, dass in dem Verschiebestück eine Ausnehmung vorgesehen ist, durch die der Schaltfinger hindurchragt, wobei die Ausnehmung den geometrischen Schwerpunkt des Verschiebestücks umgibt.

Es ist ein besonderer Vorteil des erfindungsgemäßen Getriebestellers, dass bei Getriebestellern häufig verwendete Komponenten besonders einfach angeordnet werden können. So besitzt der Getriebesteller gemäß einer bevorzugten Ausführungsform ein Verschaltsicherungsstück zum Sicherstellen, dass der Schaltfinger stets nur in eine Gangschaltstange des Getriebes eingreift. Getriebe besitzen in der Regel für jede Gasse eine Schaltstange. Um Getriebeschäden zu verhindern, ist es vorteilhaft, das Verschaltsicherungsstück vorzusehen.

Besonders vorteilhaft ist das Verschaltsicherungsstück an einem der Verschiebestücke, insbesondere am Gassen-Verschiebestück, angebracht. Diese Anbringung ist gegenüber der Anbringung von Verschaltsicherungsstücken an herkömmlichen Getriebestellern deutlich einfacher möglich.

In einer bevorzugten Ausführungsform umfasst der Gassenschaltantrieb einen Gassenschalt-Zylinder, insbesondere einen Gassenschalt-Pneumatikzylinder oder einen Gassenschalt-Hydraulikzylinder. Alternativ kann ein elektrischer Antrieb vorgesehen sein. Beispiele sind ein Linear-Direktantrieb oder ein Elektromotor mit einem Getriebe zum Umsetzen einer Drehbewegung des Elektromotors auf eine Linearbewegung. Bevorzugt ist der Gangschaltantrieb so aufgebaut wie der Gassenschaltantrieb.

Einen besonders flexibel einsetzbaren Getriebesteller erhält man, wenn der Gangschalt-Zylinder (i) einen ersten Satz an Ventilanschlüssen besitzt, die auf einer ersten lateralen Seite des Gangschalt-Zylinders angeordnet sind, und (ii) einen zweiten Satz an Ventilanschlüssen, die auf einer der ersten lateralen Seite gegenüberliegenden, zweiten lateralen Seite des Gangschalt-Zylinders angeordnet sind, wobei der Gangschalt-Zylinder so ausgebildet ist, dass ein nicht-synchronisiertes Getriebe mittels des ersten Satzes an Ventilanschlüssen schaltbar ist und ein synchronisiertes Getriebe mittels beider Sitze an Ventilanschlüssen schaltbar ist.

Bevorzugt besitzt der Getriebesteller einen Gassenantrieb-Anschlag zum Begrenzen eines maximalen Gassenantrieb-Verfahrwegs des Gassenantriebs in Gassenschalt-Arbeitsrichtung. Hierdurch wird vorteilhafterweise erreicht, dass der Getriebesteller für Getriebe verwendbar ist, deren Schaltweg kleiner als ein Gassenantrieb-Hub des Gassenantriebs des Antriebs ist. Unter dem Gassenantriebs-Hub ist der Abstand zwischen den beiden extremen Stellungen gemeint, die der Gassenantrieb einnehmen kann. Besonders vorteilhaft wird ein derartiger Getriebesteller mit einem Gassenschalt-Pneumatikzylinder versehen. In diesem Fall schlägt der Schaltfinger am Gassenantrieb-Anschlag an, so dass der Hub allein durch das Vorsehen des Gassenantriebs-Anschlags ohne weiteren Regelaufwand begrenzt wird.

Analog umfasst der Getriebesteller bevorzugt alternativ oder additiv einen Gangantrieb-Anschlag zum Begrenzen eines maximalen Gangantrieb-Hubs des Gangantriebs in Gangschalt-Arbeitsrichtung.

Die Erfindung löst das Problem zudem durch ein Getriebesystem mit einem Getriebe und einem Getriebesteller, wobei der Getriebesteller mittels eines Adapters mit dem Getriebe verbunden ist. Der Getriebesteller kann, muss aber nicht, die oben genannten Eigenschaften aufweisen. So ist es prinzipiell möglich, auch Getriebesteller mit einem schwenkbaren Schaltfinger über einen Adapter mit einem Getriebe zu verbinden. Vorteilhaft hieran ist, dass ein Getriebesteller für verschiedene Getriebe verwendbar ist. Der Adapter kann mit dem Getriebesteller lösbar verbunden, beispielsweise verschraubt sein.

Besonders bevorzugt ist der Gangantrieb-Anschlag an dem Adapter ausgebildet oder befestigt. Analog ist additiv oder alternativ der Gassenantrieb-Anschlag an dem Adapter ausgebildet oder befestigt. Um einen solchen Getriebesteller an ein bestehendes manuell zu schaltendes Getriebe anzupassen, ist es ausreichend, allein den Adapter anzupassen.

Im Folgenden werden Ausführungsformen der Erfindung anhand der beigefügten Zeichnungen näher erläutert. Dabei zeigt
- Figur 1: perspektivische Ansicht eines erfindungsgemäßen Getriebestellers;
- Figur 2: eine Detailansicht eines Koppelelements des Getriebestellers gemäß Figur 1, das ein Gassenschalt-Verschiebestück und ein Gangschalt-Verschiebestück umfasst;
- Figur 3: eine weitere Ansicht eines Koppelelements mit weiteren Details;
- Figur 4: einen horizontalen Querschnitt durch ein Koppelelement,
- Figur 5: einen horizontalen Querschnitt durch das Koppelement gemäß Figur 4; die
- Figuren 6a, 6b und 6c: zeigen einen Adapter zum Verbinden des Getriebestellers mit einem Getriebe und
- Figur 7: stellt ein Schema der Lagerung des Schaltfingers am Gassenschalt- und am Gangschalt-Verschiebestück dar.

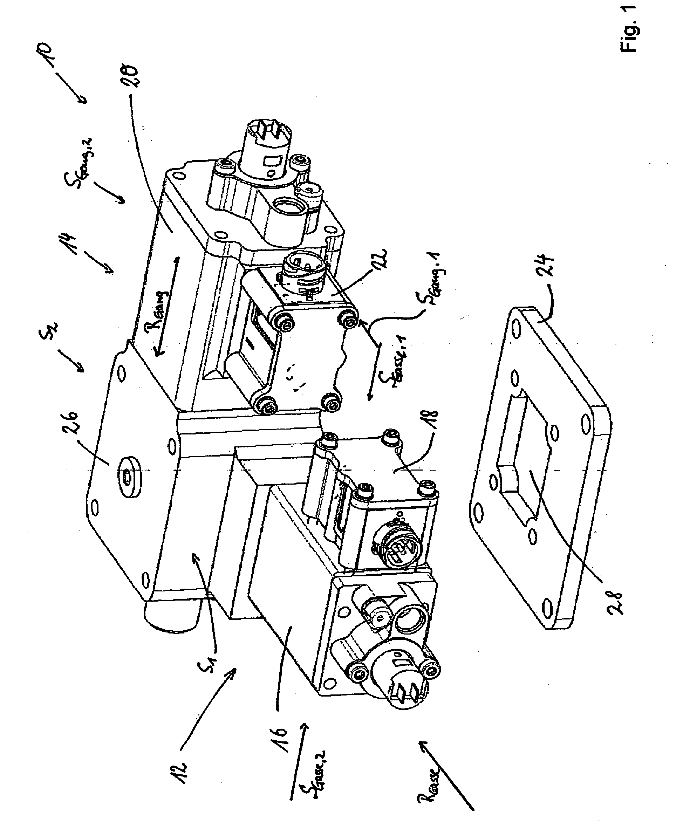

Figur 1 zeigt einen Getriebesteller 10 mit einem Gassenschaltantrieb 12 und einem Gangschaltantrieb 14. Der Gassenschaltantrieb 12 besitzt eine Gassenschalt-Arbeitsrichtung R_{Gasse}, die senkrecht zu einer Gangschalt-Arbeitsrichtung R_{Gang} des Gangschaltantriebs 14 verläuft. Bei einem Getriebesteller gemäß Figur 1 umfasst der Gassenschaltantrieb 12 einen Gassenschalt-Pneumatikzylinder, der über eine Gassenschalt-Druckluftzuleitung bzw. Gassenschalt-Ventileinheit 18 mit Druckluft beaufschlagt werden kann. Die Gassenschalt-Druckluftzuleitung 18 umfasst einen ersten Satz an Ventilanschlüssen und ist auf einer ersten lateralen Seite S_{Gasse, 1} an dem Gassenschalt-Pneumatikzylinder 16 angeschraubt. Alternativ ist die Gassenschalt-Druckluftzuleitung 18 auf einer gegenüberliegenden Seite S_{Gasse,2} anmontiert.

Der Gangschaltantrieb 14 umfasst einen Gangschalt-Pneumatikzylinder 20, der über eine Gangschalt-Druckluftzuleitung bzw. Gangschalt-Ventileinheit 22 mit Druckluft beaufschlagbar ist, die an einer ersten lateralen Seite S_{Gang, 1} angeschraubt ist.

Der Gangschalt-Pneumatikzylinder 20 ist ausgebildet, um auf einer der ersten lateralen Seite S_{Gang,1} gegenüberliegenden, zweiten lateralen Seite S_{Gang,2}, eine nicht eingezeichnete, zweite Gangschalt-Druckluftzuleitung aufzunehmen, die einen zweiten Satz an Ventilanschlüssen besitzt. Die in Figur 1 gezeigte Ausführungsform ist ausgebildet um ein nicht eingezeichnetes, nicht-synchronisiertes Getriebe zu schalten. Um ein synchronisiertes Getriebe zu schalten, wird die zweite Gangschalt-Druckluftzuleitung montiert.

Der Getriebesteller 10 umfasst einen Adapter 24, mit dem er an einem nicht eingezeichneten Nutzkraftwagen-Getriebe, beispielsweise einem Lastkraftwagen-Getriebe oder einem Personenkraftwagen-Getriebe, angeschraubt werden kann.

Der Gassenschalt-Pneumatikzylinder 16 und der Gangschalt-Pneumatikzylinder 20 sind an einem Zentralkörper 26 angeschraubt. Der Zentralkörper 26 weist eine Ausnehmung auf, die mit einer Adapter-Ausnehmung 28 des Adapters 24 in Verbindung steht.

Der Zentralkörper 26 ist so ausgebildet, dass der Gassenschaltantrieb 12 sowohl, wie in Figur 1 gezeigt, an einer ersten Seite S₁ im rechten Winkel zum Gangschaltantrieb 14 anmontierbar ist, als auch an einer der ersten Seite S₁ gegenüber liegenden Seite S₂.

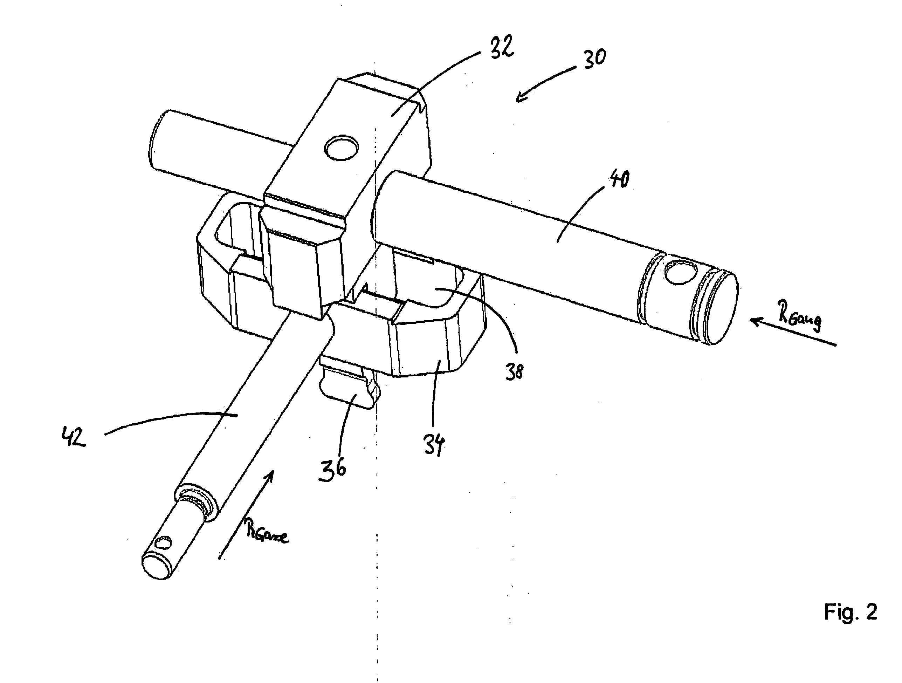

Figur 2 zeigt ein Koppelelement 30, das ein Gangschalt-Verschiebestück 32 und ein Gassenschalt-Verschiebestück 34 aufweist. Das Koppelelement 30 besitzt zudem einen Schaltfinger 36, der am Gangschalt-Verschiebestück 32 und am Gassenschalt-Verschiebestück 34 verschieblich geführt gelagert ist. Dazu durchgreift der Schaltfinger 36 eine Verschiebestück-Ausnehmung 38 des Gassenschalt-Verschiebestücks 34 und wird in dieser so geführt, dass er sich relativ zum Gassenschalt-Verschiebestück 34 lediglich in Gangschalt-Arbeitsrichtung R_{Gang} bewegen kann.

Das Gangschalt-Verschiebstück 32 ist über einen Gangschalt-Zylinderkolben 40 des in Figur 2 nicht vollständig eingezeichneten Gangschalt-Pneumatikzylinders 20 (vgl. Figur 1) bewegbar. Das Gassenschalt-Verschiebestück 34 ist über einen Gassenschalt-Zylinderkolben 42 des in Figur 2 ebenfalls nicht vollständig eingezeichneten Gassenschalt-Pneumatikzylinders 16 (vgl. Figur 1) in Gassenschalt-Arbeitsrichtung R_{Gasse} bewegbar und ist für eine derartige Bewegung im Gangschalt-Verschiebestück 32 in einer Linearführung verschieblich geführt gelagert.

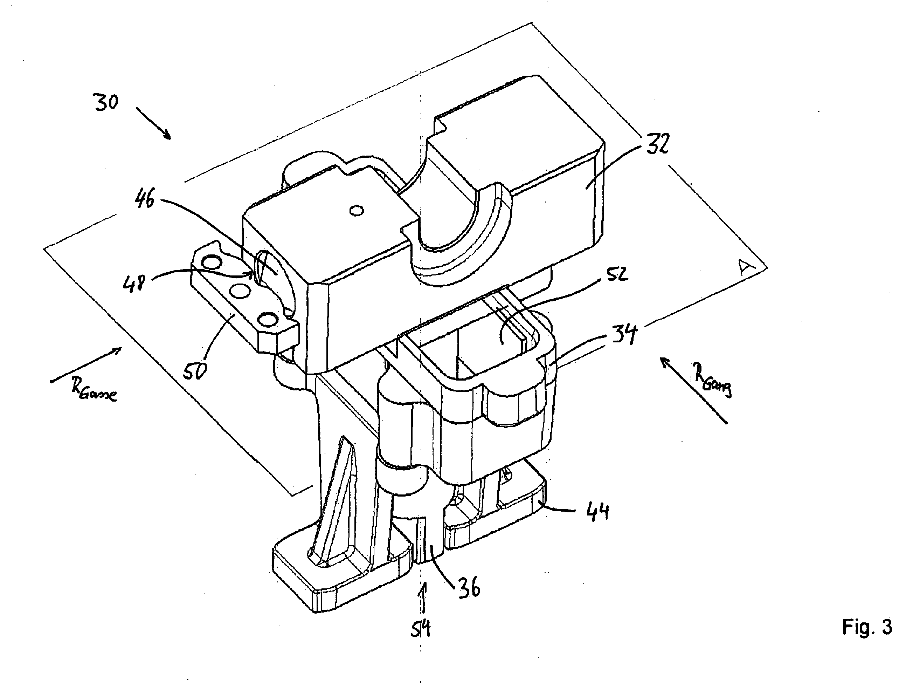

Figur 3 zeigt eine weitere perspektivische Ansicht des Koppelelements 30, in der zusätzlich ein Verschaltsicherungsstück 44 zu sehen ist. Das Verschaltsicherungsstück 44 ist am Gassenschalt-Verschiebestück 34 befestigt und wird mit diesem bewegt. Greift der Schaltfinger 36 in eine nicht eingezeichnete Schaltstange eines ebenfalls nicht eingezeichneten Getriebes, so stellt das Verschaltsicherungsstück 44 sicher, dass der Schaltfinger 36 nicht unbeabsichtigt in eine zweite Schaltstange eingreift. Anders als im Stand der Technik kann bei dem erfindungsgemäßen Getriebesteller das Verschaltsicherungsstück 44 einfach am Gassenschalt-Verschiebstück 34 angebracht werden oder mit diesem sogar einstückig ausgebildet sein.

Figur 3 zeigt zudem einen im Gangschalt-Verschiebestück 32 aufgenommenen Rastbolzen 46, der mit einer in Figur 3 teilweise verdeckten Spitze über das Gangschalt-Verschiebestück 32 hinausragt. Mit seiner Spitze wirkt der Rastbolzen 46 mit einer Rastkontur 48 eines Raststücks 50 zusammen, so dass der Schaltfinger 36 an einer vorgegebenen Position bezüglich der Gangschalt-Arbeitsrichtung R_{Gang} gehalten wird. Das Raststück 50 ist beispielsweise am Zentralkörper 26 (vgl. Figur 1) befestigt. Der Adapter 24 (vgl. Figur 1) ist so ausgebildet, dass der Schaltfinger 36 die Gasse wechseln kann, wenn der Rastbolzen 46 in der Raststellung ist. Alternativ ist der Rastbolzen 46 am Zentralkörper 26 ausgebildet und das Gangschalt-Verschiebestück 32 besitzt die Rastkontur 48.

Wie in den Figuren 2 und 3 zu sehen ist, durchgreift der Schaltfinger 36 das Gassenschalt-Verschiebestück 34 im Wesentlichen zentrisch, so dass in einer in Figur 2 und Figur 3 gezeigten Nulllage bei einem Betätigen von Gangschalt-Pneumatikzylinder 16 (vgl. Figur 1) bzw. Gangschalt-Pneumatikzylinder 20 (vgl. Figur 1) nur kleine Kippmomente von einer ersten Führung 52 (Figur 3) des Schaltfingers 36 im Gangschalt-Verschiebestück 34 und von einer in Figur 3 nicht sichtbaren, zweiten Führung im Gangschalt-Verschiebestück 32 aufgefangen werden müssen.

Da zum Schalten der Gänge des nicht eingezeichneten Getriebes in der Regel eine höhere Kraft aufgewendet werden muss als zum Schalten der Gasse, ist der Gangschalt-Pneumatikzylinder 20 (Figur 1) größer ausgelegt als der Gassenschalt-Pneumatikzylinder 16. Es ist daher vorteilhaft, das Gangschalt-Verschiebestück 32 auf einer einem Eingriffsende 43 des Schaltfingers 36 gegenüberliegenden Ende des Gassenschalt-Verschiebestücks 34 anzuordnen. In anderen Worten ist in Einbaulage des Getriebestellers das Gassenschalt-Verschiebestück 34 dichter beim Getriebe angeordnet als das Gangschalt-Verschiebestück 32. In den Figuren 1 bis 3 befindet sich das nicht eingezeichnete Getriebe in Betriebsstellung des Getriebestellers unten. Alternativ kann der Getriebesteller in Betriebsstellung unten oder seitlich am Getriebe angeordnet sein.

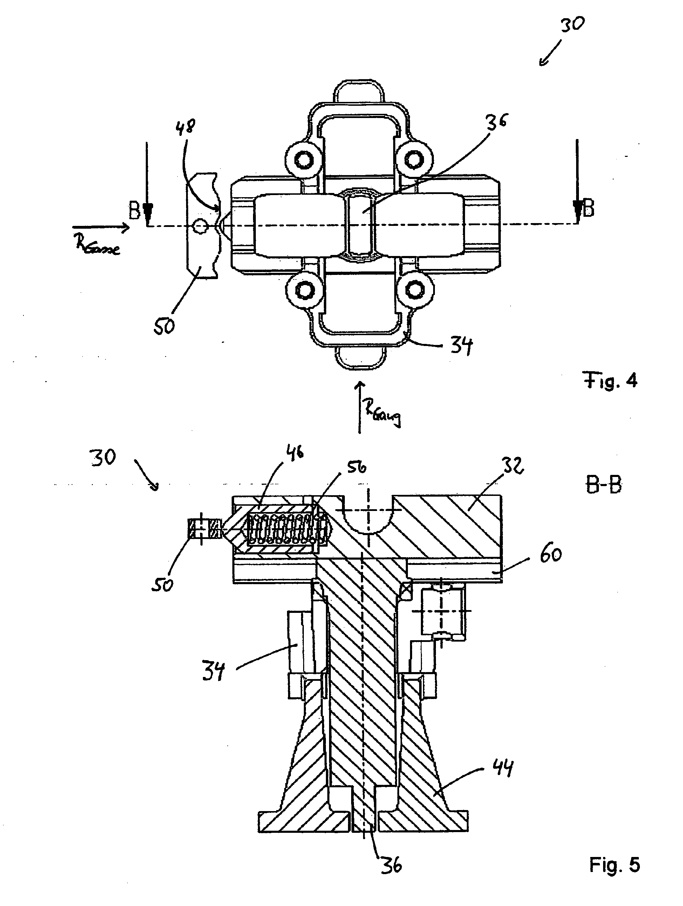

Figur 4 zeigt einen Querschnitt durch die Ebene A nach Figur 3 durch das Koppelelement 30.

Figur 5 zeigt einen Querschnitt entlang B-B gemäß Figur 4 durch das Koppelelement 30. Es ist zu erkennen, dass der Rastbolzen 46 eine innen liegende Feder 56 aufweist, die ihn mit seiner Spitze 58 in Eingriff mit dem Raststück 50 bringt. Figur 5 zeigt zudem eine zweite Führung 60 zwischen Schaltfinger 36 und Gangschalt-Verschiebestück 32, die senkrecht zur in Figur 3 gezeigten ersten Führung 52 verläuft und am Gangschalt-Verschiebestück 32 ausgebildet ist.

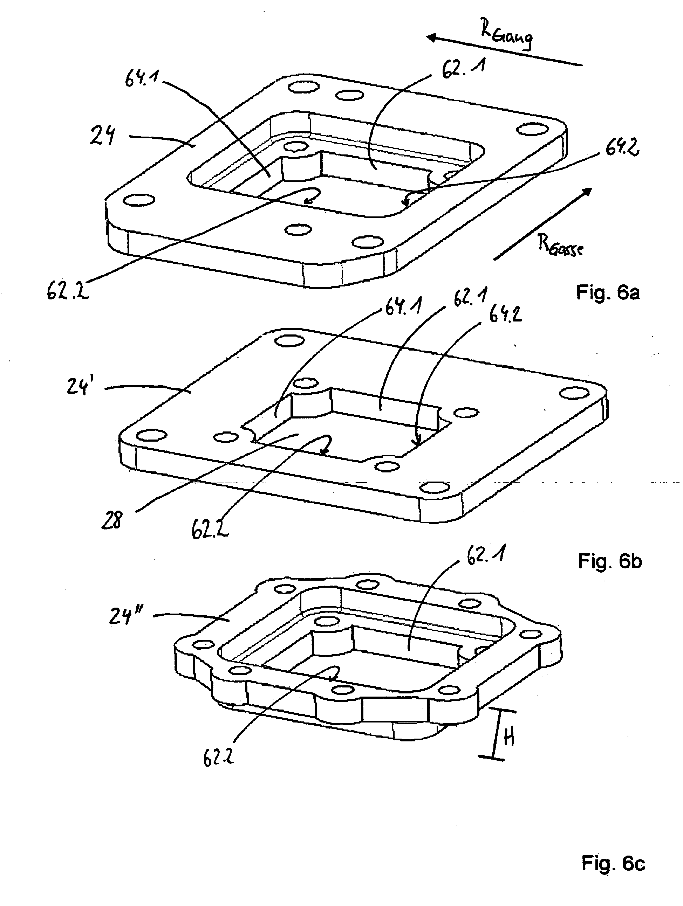

Figur 6a zeigt einen Adapter 24' eines erfindungsgemäßen Getriebestellers gemäß einer zweiten Ausführungsform. Der Adapter 24' ist ausgebildet, um einerseits am Zentralkörper 26 (vgl. Figur 1) und andererseits an einem Getriebe befestigt, insbesondere festgeschraubt zu werden. Die Adapter-Ausnehmung 28 ist so ausgebildet, dass ihre Begrenzungen 62.1, 62.2 einen Gassenantrieb-Anschlag 62 bilden können. Begrenzungen 64.1, 64.2 können einen Gangantrieb-Anschlag 64 bilden. Alternativ wird der Gangantrieb-Anschlag am Gangschalt-Verschiebestück 32 ausgebildet, der an dem Zentralkörper 26 (vgl. Figur 1) anschlägt.

Figur 6b zeigt den Adapter 24 für ein Getriebe, das einen kleineren Hub des Schaltfingers benötigt als das Getriebe, für den der Getriebesteller mit dem Adapter 24' nach Figur 6a verwendet wird. Dazu ist die Adapter-Ausnehmung 28 kleiner ausgebildet. In anderen Worten ist der Abstand zwischen beiden Begrenzungen 62.1 bzw. 62. 2 des Gassenantrieb-Anschlags 62 kleiner als bei dem Adaptern gemäß Figur 6a. Auf diese Weise wird der Hub in Gassenschalt-Arbeitsrichtung R_{Gasse} verkürzt. Auf gleiche Weise ist der Abstand zwischen beiden Seiten 64.1 und 64.2 des Gangantrieb-Anschlags 64 kleiner als bei dem Adapter 24 gemäß Figur 6a, so dass auch ein Hub in Gangschalt-Arbeitsrichtung R_{Gang} bei dem Adapter 24' gemäß Figur 6b kleiner ist als bei dem Adapter 24 gemäß Figur 6a.

Figur 6c zeigt eine weitere Ausführungsform eines Adapters 24", bei der Gassenantriebs-Anschlag 62 mit seinen Wänden 62.1 und 62.2 eine Höhe H des Adapters 24" nicht vollständig durchgreift.

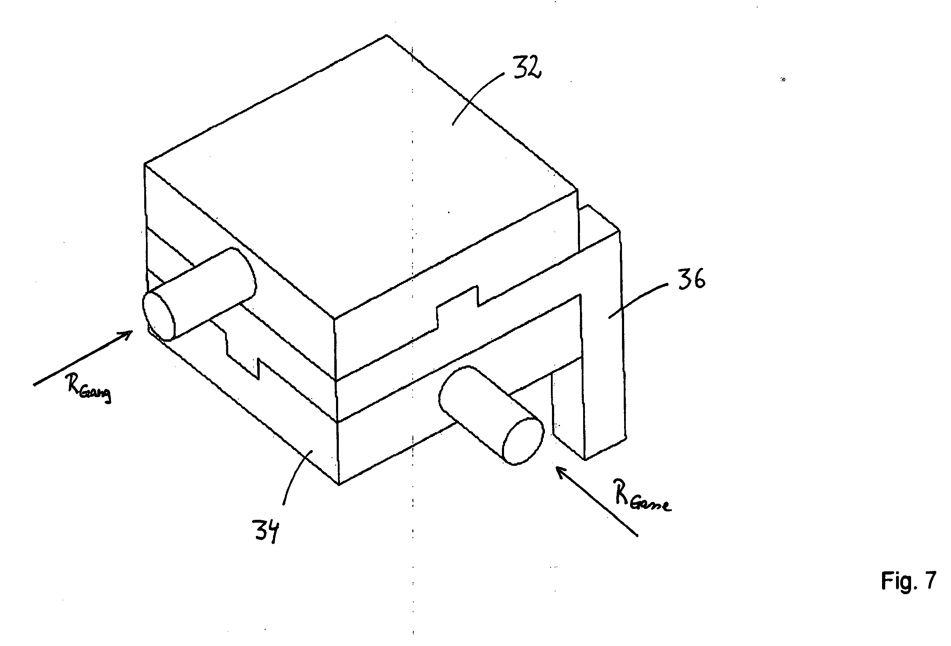

In Figur 7 ist nochmals das Grundprinzip des Getriebestellers gezeigt. Über zwei Linearführungen in dem Gangschalt-Verschiebestück 32 einerseits und dem Gassenschalt-Verschiebestück 34 andererseits addieren sich die Gangschalt-Arbeitsrichtung R_{Gang} und die Gassenschalt-Arbeitsrichtung R_{Gasse} vektoriell. In Figur 7 ist gezeigt, dass der Schaltfinger 36 auch seitlich der Verschiebestücke 32, 34 angeordnet sein kann.

## Patentansprüche

1. Getriebesteller zum Schalten eines Getriebes, mit
(a) einem Gassenschaltantrieb (12),
(b) einem Gangschaltantrieb (14) und
(c) einem vom Gassenschaltantrieb (12) und vom Gangschaltantrieb (14) bewegbaren Schaltfinger (36)
zum Übertragen eine Schaltbewegung auf das Getriebe,
(d) einem mit dem Gassenschaltantrieb (12) verbundenen Gangschalt-Verschiebestück (34) und
(e) einem mit dem Gangschaltantrieb (14) verbundenen Gangschalt-Verschiebestück (32),
(f) wobei der Schaltfinger (36) an dem Gassenschalt-Verschiebestück (34) und dem Gangschalt-Verschiebestück (32)
über zwei Linearführungen in dem Gangschalt-Verschiebestück (32) einerseits und dem Gassenschalt-Verschiebestück (34) andererseits
verschieblich geführt gelagert ist,
**dadurch gekennzeichnet, dass** der Getriebesteller (10)
(i) eine Rastkontur (48) aufweist und
(ii) ein Verschiebestück (32, 34), insbesondere das Gang-Verschiebestück (32), einen vorgespannten Rastbolzen (46) besitzt, der mit der Rastkontur (48) zum Verrasten des Schaltfingers (36) in einer vorgegebenen Position in der Gangschalt-Arbeitsrichtung (R_{Gang}) zusammenwirkt.

2. Getriebesteller nach Anspruch 1, **dadurch gekennzeichnet, dass**
(i) der Gassenschaltantrieb (12) eine Gassenschalt-Arbeitsrichtung (R_{Gasse}) besitz und
(ii) der Gangschaltantrieb (14) eine Gangschalt-Arbeitsrichtung (R_{Gang}) besitzt, die im Wesentlichen senkrecht zur Gassenschalt-Arbeitsrichtung (R_{Gasse}) verläuft.

3. Getriebesteller nach einem der vorstehenden Ansprüche, **dadurch gekennzeichnet, dass** der Schaltfinger (36) an dem Gassenschalt-Verschiebestück (34) und dem Gangschalt-Verschiebestück (32) mittels einer Reibverbindung geführt gelagert ist.

4. Getriebesteller nach einem der vorstehenden Ansprüche, **dadurch gekennzeichnet, dass** der Schaltfinger (36) ein Verschiebestück, insbesondere das Gassenschalt-Verschiebestück (34), durchgreift.

5. Getriebesteller nach einem der vorstehenden Ansprüche, **gekennzeichnet durch** ein Verschaltsicherungsstück (44) zum Sicherstellen, dass der Schaltfinger (36) stets nur in eine Schaltstange des Getriebes eingreift.

6. Getriebesteller nach Anspruch 5, **dadurch gekennzeichnet, dass** das Verschaltsicherungsstück (44) an einem der Verschiebestücke (32, 34), insbesondere am Gassen-Verschiebestück (34), angebracht ist.

7. Getriebesteller nach einem der vorstehenden Ansprüche, **dadurch gekennzeichnet, dass** das Gassenschalt-Verschiebestück (34) in Einbaulage des Getriebestellers (10) dichter bei dem Getriebe angeordnet ist als das Gangschalt-Verschiebestück (32).

8. Getriebesteller nach einem der vorstehenden Ansprüche, **dadurch gekennzeichnet, dass** der Gassenschaltantrieb (12) einen Gassenschalt-Zylinder, insbesondere einen Gassenschalt-Pneumatikzylinder (16) oder einen Gassenschalt-Hydraulikzylinder, umfasst und/oder der Gangschaltantrieb (14) einen Gangschalt-Zylinder, insbesondere einen Gangschalt-Pneumatikzylinder (20) oder einen Gangschalt-Hydraulikzylinder, umfasst.

9. Getriebesteller nach Anspruch 8, **dadurch gekennzeichnet, dass** der Gangschalt-Zylinder
(i) einen ersten Satz an Ventilanschlüssen besitzt, die auf einer ersten lateralen Seite (S_{Gasse,1}) des Gangschalt-Zylinder (16) angeordnet sind, und
(ii) einen zweiten Satz an Ventilanschlüssen besitzt, die auf einer zweiten lateralen Seite des Gangschalt-Zylinder (16) angeordnet sind,
(i) wobei der Gangschalt-Zylinder (20) so ausgebildet ist, dass
- ein nicht synchronisiertes Getriebe mittels des ersten Satzes an Ventilanschlüssen schaltbar ist, und
- ein synchronisiertes Getriebe mittels beider Sätze an Ventilanschlüssen schaltbar ist.

10. Getriebesteller nach einem der vorstehenden Ansprüche, **gekennzeichnet durch** einen Gassenantrieb-Anschlag (62) zum Begrenzen eines maximalen Gassenantrieb-Verfahrwegs in Gassenschalt-Arbeitsrichtung (R_{Gasse}).

11. Getriebesteller nach einem der vorstehenden Ansprüche, **gekennzeichnet durch** einen Gangantrieb-Anschlag (64) zum Begrenzen eines maximalen Gangantrieb-Verfahrwegs in Gangschalt-Arbeitsrichtung (R_{Gang}).

12. Getriebesystem, insbesondere Nutzfahrzeug-Getriebesystem, mit einem Getriebe und einem Getriebesteller (10) nach einem der vorstehenden Ansprüche.

13. Getriebesystem, insbesondere nach Anspruch 12, **dadurch gekennzeichnet, dass** der Getriebesteller (10) einen Adapter (24) zum Verbinden mit dem Getriebe umfasst.

14. Getriebesystem nach einem der Ansprüche 12 oder 13, **dadurch gekennzeichnet, dass** der Gangantrieb-Anschlag (64) an dem Adapter ausgebildet oder befestigt ist.

## Claims

1. Gear actuator for shifting a transmission, having
(a) a gate shifting drive (12),
(b) a gear shifting drive (14), and
(c) a selector finger (36) which can be moved by the gate shifting drive (12) and by the gear shifting drive (14) for transmitting a shifting movement to the transmission,
(d) a gear shifting displacement piece (34) which is connected to the gate shifting drive (12), and
(e) a gear shifting displacement piece (32) which is connected to the gear shifting drive (14),
(f) the selector finger (36) being mounted on the gate shifting displacement piece (34) and the gear shifting displacement piece (32) such that it is guided displaceably via two linear guides in the gear shifting displacement piece (32) on the one hand and the gate shifting displacement piece (34) on the other hand,
**characterized in that** the gear actuator (10)
(i) has a latching contour (48), and
(ii) a displacement piece (32, 34), in particular the gear displacement piece (32), has a prestressed latching pin (46) which interacts with the latching contour (48) for latching the selector finger (36) in a predefined position in the gear shifting working direction (R_{Gang}).

2. Gear actuator according to Claim 1, **characterized in that**
(i) the gate shifting drive (12) has a gate shifting working direction (R_{Gasse}) , and
(ii)the gear shifting drive(14) has a gear shifting working direction (R_{Gang}) which extends substantially perpendicularly with respect to the gate shifting working direction (R_{Gasse}).

3. Gear actuator according to one of the preceding claims, **characterized in that** the selector finger (36) is mounted on the gate shifting displacement piece (34) and the gear shifting displacement piece (32) such that it is guided by means of a frictional connection.

4. Gear actuator according to one of the preceding claims, **characterized in that** the selector finger (36) reaches through a displacement piece, in particular the gate shifting displacement piece (34).

5. Gear actuator according to one of the preceding claims, **characterized by** a faulty shifting securing piece (44) for ensuring that the selector finger (36) always engages only into one selector rod of the transmission.

6. Gear actuator according to Claim 5, **characterized in that** the faulty shifting securing piece (44) is attached to one of the displacement pieces (32, 34), in particular to the gate displacement piece (34).

7. Gear actuator according to one of the preceding claims, **characterized in that** the gate shifting displacement piece (34) is arranged closer to the transmission in the installation position of the gear actuator (10) than the gear shifting displacement piece (32).

8. Gear actuator according to one of the preceding claims, **characterized in that** the gate shifting drive (12) comprises a gate shifting cylinder, in particular a gate shifting pneumatic cylinder (16) or a gate shifting hydraulic cylinder, and/or the gear shifting drive (14) comprises a gear shifting cylinder, in particular a gear shifting pneumatic cylinder (20) or a gear shifting hydraulic cylinder.

9. Gear actuator according to Claim 8, **characterized in that** the gear shifting cylinder
(i) has a first set of valve connections which are arranged on a first lateral side (S_{Gasse,1}) of the gear shifting cylinder (16), and
(ii) has a second set of valve connections which are arranged on a second lateral side of the gear shifting cylinder (16),
(iii) the gear shifting cylinder (20) being configured in such a way that
- a non-synchronized transmission can be shifted by means of the first set of valve connections, and
- a synchronized transmission can be shifted by means of both sets of valve connections.

10. Gear actuator according to one of the preceding claims, **characterized by** a gate drive stop (62) for limiting a maximum gate drive movement path in the gate shifting working direction (R_{Gasse}).

11. Gear actuator according to one of the preceding claims, **characterized by** a gear drive stop (64) for limiting a maximum gear drive movement path in the gear shifting working direction (R_{Gang}).

12. Transmission system, in particular commercial vehicle transmission system, having a transmission and a gear actuator (10) according to one of the preceding claims.

13. Transmission system, in particular according to Claim 12, **characterized in that** the gear actuator (10) comprises an adapter (24) for connection to the transmission.

14. Transmission system according to either of Claims 12 and 13, **characterized in that** the gear drive stop (64) is formed on or fastened to the adapter.

## Revendications

1. Actionneur de boîte de vitesses pour effectuer les changements de vitesse d'une boîte de vitesses, avec :
(a) un entraînement de changement de couloir (12) ;
(b) un entraînement de changement de rapport (14) ; et
(c) un doigt de changement de vitesse (36) pouvant être déplacé à partir de l'entraînement de changement de couloir (12) et de l'entraînement de changement de rapport (14) pour la transmission d'un mouvement de changement de vitesse à la boîte de vitesses ;
(d) une pièce baladeuse de changement de rapport (34) reliée à l'entraînement de changement de couloir (12) ; et
(e) une pièce baladeuse de changement de rapport (32) reliée à l'entraînement de changement de rapport (14) ;
(f) le doigt de changement de vitesse (36) étant disposé de façon à pouvoir être guidé de façon coulissante au niveau de la pièce baladeuse de changement de couloir (34) et de la pièce baladeuse de changement de rapport (32) via deux guides linéaires prévus dans la pièce baladeuse de changement de rapport (32) d'une part et au niveau de la pièce baladeuse de changement de couloir (34) d'autre part ;
**caractérisé en ce que** l'actionneur de boîte de vitesses (10) comporte :
(i) un contour d'arrêt (48) ; et
(ii) une pièce baladeuse (32, 34), notamment la pièce baladeuse de rapport (32), possédant un boulon d'arrêt (46) précontraint interagissant avec le contour d'arrêt (48) pour arrêter le doigt de changement de vitesse (36) dans une position prédéfinie dans la direction de travail de changement de rapport (R_{Gang}).

2. Actionneur de boîte de vitesses selon la revendication 1, **caractérisé en ce que** :
(i) l'entraînement de changement de couloir (12) possède une direction de travail de changement de couloir (R_{Gasse}) ; et
(ii) l'entraînement de changement de rapport (14) possède une direction de travail de changement de rapport (R_{Gang}) s'étendant pour l'essentiel perpendiculairement à la direction de travail de changement de couloir (R_{Gasse}).

3. Actionneur de boîte de vitesses selon l'une quelconque des revendications précédentes, **caractérisé en ce que** le doigt de changement de vitesse (36) est disposé de façon à être guidé au niveau de la pièce baladeuse de changement de couloir (34) et de la pièce baladeuse de changement de rapport (32) à l'aide d'une liaison par frottement.

4. Actionneur de boîte de vitesses selon l'une quelconque des revendications précédentes, **caractérisé en ce que** le doigt de changement de vitesse (36) engrène une pièce baladeuse, notamment la pièce baladeuse de changement de couloir (34).

5. Actionneur de boîte de vitesses selon l'une quelconque des revendications précédentes, **caractérisé par** une pièce de protection contre le passage d'une mauvaise vitesse (44) permettant de garantir que le doigt de changement de vitesse (36) ne s'engrène que dans une tringle de commande de la boîte de vitesses.

6. Actionneur de boîte de vitesses selon la revendication 5, **caractérisé en ce que** la pièce de protection contre le passage d'une mauvaise vitesse (44) est placée au niveau d'une des pièces baladeuses (32, 34), notamment au niveau de la pièce baladeuse de couloir (34).

7. Actionneur de boîte de vitesses selon l'une quelconque des revendications précédentes, **caractérisé en ce que** la pièce baladeuse de changement de couloir (34) est agencée de façon plus épaisse, dans la position de montage de l'actionneur de boîte de vitesses (10), dans la boîte de vitesses, que la pièce baladeuse de changement de rapport (32).

8. Actionneur de boîte de vitesses selon l'une quelconque des revendications précédentes, **caractérisé en ce que** l'entraînement de changement de couloir (12) comprend un vérin de changement de couloir, notamment un vérin pneumatique de changement de couloir (16) ou un vérin hydraulique de changement de couloir et/ou que l'entraînement de changement de rapport (14) comprend un vérin de changement de rapport, notamment un vérin pneumatique de changement de rapport (20) ou un vérin hydraulique de changement de rapport.

9. Actionneur de boîte de vitesses selon la revendication 8, **caractérisé en ce que** le vérin de changement de rapport possède :
(i) un premier jeu de branchements de soupape disposés sur un premier côté latéral (S_{Gasse,1}) du vérin de changement de rapport (16) ; et
(ii) un deuxième jeu de branchements de soupape disposés sur un deuxième côté latéral du vérin de changement de rapport (16) ;
(i) le vérin de changement de rapport (20) étant réalisé de telle sorte que :
- une boîte de vitesses non synchronisée peut effectuer un changement de vitesse au moyen du premier jeu de branchements de soupape ; et
- une boîte de vitesses synchronisée peut effectuer un changement de vitesse à l'aide des deux jeux de branchements de soupape.

10. Actionneur de boîte de vitesses selon l'une quelconque des revendications précédentes, **caractérisé par** la présence d'une butée d'entraînement de couloir (62) servant à limiter une course maximale d'entraînement de couloir dans la direction de travail de changement de couloir (R_{Gasse}).

11. Actionneur de boîte de vitesses selon l'une quelconque des revendications précédentes, **caractérisé par** la présence d'une butée d'entraînement de rapport (64) servant à limiter une course maximale d'entraînement de rapport dans la direction de travail de changement de rapport (R_{Gang}).

12. Système de boîte de vitesses, notamment Système de boîte de vitesses de véhicule utilitaire, avec une boîte de vitesses et un actionneur de boîte de vitesses (10) selon l'une quelconque des revendications précédentes.

13. Système de boîte de vitesses, notamment selon la revendication 12, **caractérisé en ce que** l'actionneur de boîte de vitesses (10) comprend un adaptateur (24) servant à effectuer la connexion avec la boîte de vitesses.

14. Système de boîte de vitesses selon l'une quelconque des revendications 12 ou 13, **caractérisé en ce que** la butée d'entraînement de rapport (64) est réalisée au niveau de l'adaptateur ou fixée à lui.
